# EUROPEAN PATENT SPECIFICATION

(11) **EP 2 652 829 B1**
(45) Date of publication and mention of the grant of the patent: **20.05.2015**
(21) Application number: 11808239.5
(22) Date of filing: 16.12.2011
(51) Int. Cl.: H01M 8/12, H01M 8/24, H01M 8/04

(54) **METHOD AND ARRANGEMENT FOR AVOIDING EARTH FAULT CURRENTS IN FUEL CELL SYSTEMS**
VERFAHREN UND ANORDNUNG ZUR VERMEIDUNG VON ERDSCHLUSSSTRÖMEN IN BRENNSTOFFZELLENSYSTEMEN
PROCÉDÉ ET AGENCEMENT POUR ÉVITER LES COURANTS DE DÉFAUT DE TERRE DANS DES SYSTÈMES À PILES À COMBUSTIBLE

(30) Priority: 17.12.2010 FI 20106334
(43) Date of publication of application: 23.10.2013
(73) Proprietor: Convion Oy, 02150 Espoo (FI)
(72) Inventor: ÅSTRÖM, Kim, 02460 Kirkkonummi (FI); LAITINEN, Marko, 01690 Vantaa (FI)
(74) Representative: LEITZINGER OY
(86) International application number: PCT/FI2011/051119
(87) International publication number: WO 2012/080576

(56) References cited:
- WO-A1-2008/015461
- JP-A- 2000 058 079
- JP-A- 2010 118 151
- US-A1- 2002 109 406
- US-A1- 2005 277 003
- US-A1- 2008 096 068
- US-B1- 6 186 254

## Description

### The field of the invention

Fuel cell devices are becoming general in fulfilling different kind of electricity production needs. Fuel cell devices are electrochemical devices supplied with reactants for producing electrical energy.

### The state of the art

Fuel cell devices are electrochemical devices, which enables production of electricity with high duty ratio in an environmentally friendly process. Fuel cell technology is considered as one of the most promising future energy production methods.

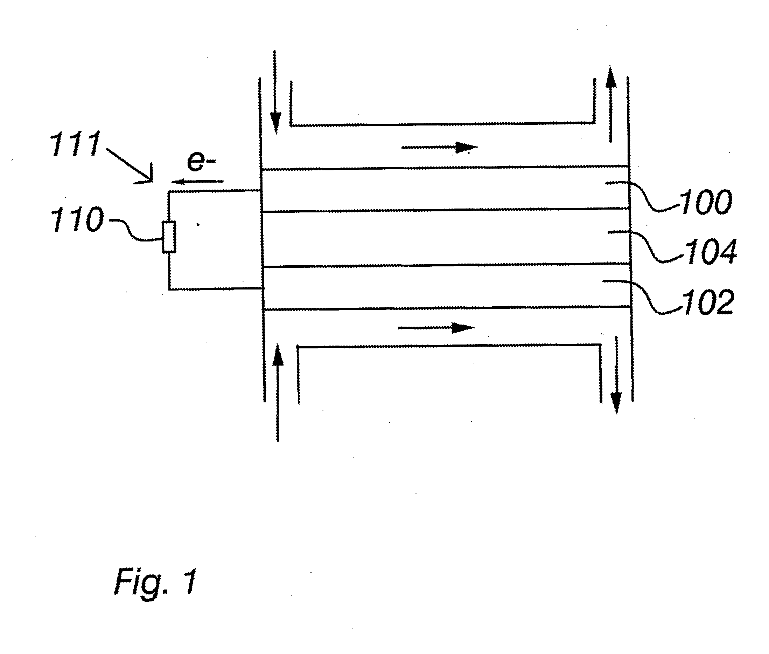

Fuel cell, as presented in fig 1, comprises an anode side 100 and a cathode side 102 and an electrolyte material 104 between them. The reactants fed to the fuel cell devices undergo a process in which electrical energy and heat are produced as a result of an exothermal reaction.

In solid oxide fuel cells (SOFCs) oxygen 106 is fed to the cathode side 102 and it is reduced to a negative oxygen ion by receiving electrons from the cathode. The negative oxygen ion goes through the electrolyte material 104 to the anode side 100 where it reacts with the used fuel 108 producing water and also typically carbondioxide (CO2). Between anode and cathode is an external electric circuit 111 for transferring electrons e- to the cathode. External electric circuit comprises a load 110.

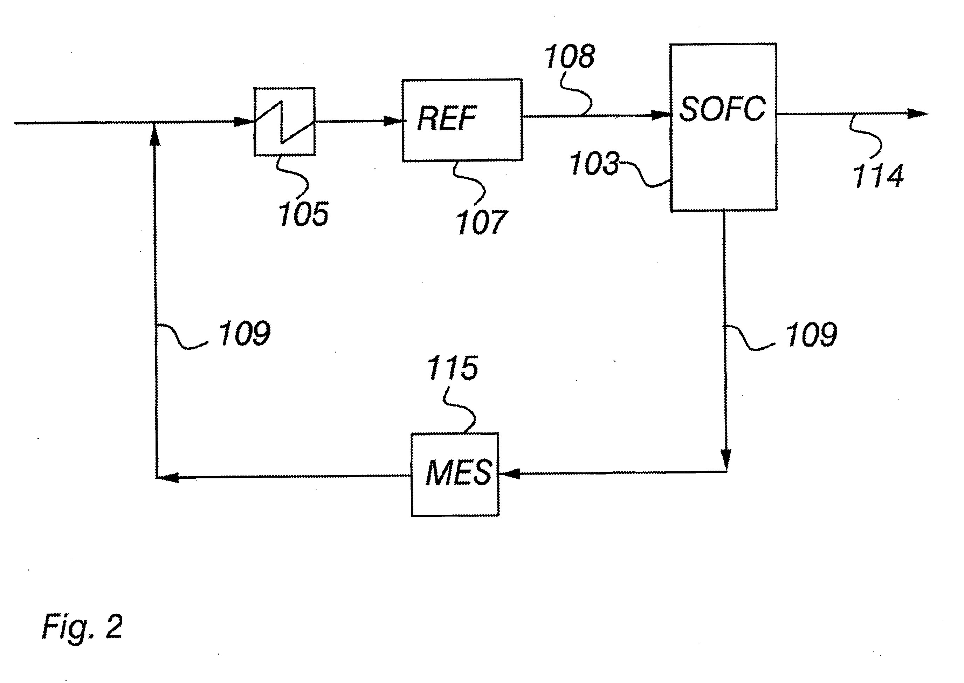

In figure 2 is presented a SOFC device, which can utilize as fuel for example natural gas, bio gas, methanol or other compounds containing hydrocarbons. SOFC device in figure 2 comprises planar-like fuel cells in stack formation 103 (SOFC stack). Each fuel cell comprises anode 100 and cathode 102 structure as presented in figure 1. Part of the used fuel is recirculated in feedback arrangement 109 through each anode.

SOFC device in fig 2 comprises a fuel heat exchanger 105 and a reformer 107. Heat exchangers are used for controlling thermal conditions in fuel cell process and there can be located more than one of them in different locations of SOFC device. The extra thermal energy in circulating gas is recovered in the heat exchanger 105 to be utilized in SOFC device or outside in a heat recovering unit. The heat recovering heat exchanger can thus locate in different locations as presented in figure 2. Reformer is a device that converts the fuel such as for example natural gas to a composition suitable for fuel cells, for example to a composition containing half hydrogen and other half methane, carbondioxide and inert gases. The reformer is not, however, necessary in all fuel cell implementations, but untreated fuel may also be fed directly to the fuel cells 103.

By using measurement means 115 (such as fuel flow meter, current meter and temperature meter) is carried out necessary measurements for the operation of the SOFC device from the through anode recirculating gas. Only part of the gas used at anodes 100 (figure 1) of the fuel cells 103 is recirculated through anodes in feedback arrangement 109 and thus in figure 2 is presented diagrammatically also as the other part of the gas is exhausted 114.

Heat management of the fuel cell stacks is one of the key functions of the balance of plant (BoP) equipment in a high temperature fuel cell system. The heat balance of the fuel cells stacks is affected by many mechanisms including internal reforming, fuel cell reactions, heat transport by flow of reactants and direct heat exchange with the surrounding structures. Typical methods for the control of the temperature balance comprise adjustment of the internal reforming rate and adjustment of air flow and cathode inlet temperature.

System heaters can be implemented as electrical heaters comprising heating resistors or gas burners or a combination thereof. Benefits of electrical heaters include excellent controllability and the ability to place them directly in reactant streams or structures to be heated. A drawback of electrical heaters is their tendency to generate earth fault currents, particularly in the case of high temperature heaters. Also fuel cell stacks, being high temperature electrical devices, may generate significant earth fault currents depending on isolation arrangements in their reactant feed, supporting structures and loading arrangement.

In stationary applications the presence of fault currents may be tolerable and can be effectively reduced by choice of connection topologies and/or by active fault current injection methods such that fault currents cancel each other out. However, in marine applications, where power distribution is to be strictly separated from earth (ship hull), no earth fault currents can be tolerated. This would typically require the use of an isolating transformer for the whole fuel cell system or, if stacks are well isolated, for electrical heaters only. Both cases involve significant added mass, volume and power losses which are highly undesirable for example in marine applications.

In document JP 10/118151 A is presented fuel cell system embodiments in which are used a controllable ground resistor to protect a fuel cell stack from earth fault currents. The controllable ground resistor is by no means operated as a heating resistor.

In document US2005/277003 A1 is presented an arrangement for heating up a cooling plate of a low temperature PEM fuel cell by dissipating power drawn from the fuel cell itself. Hence, power is drawn exclusively from the fuel cell to be heated and e.g. occasional exceeding of the power output level of the fuel cell stacks is not performed.

### Short description of the invention

The object of the invention is to accomplish an advanced arrangement for reliably protecting a fuel cell device from fault currents with minimum components and costs. This is achieved by an arrangement for avoiding earth fault currents in electrically heated high temperature fuel cell systems, each fuel cell in the fuel cell device comprising an anode side, a cathode side, an electrolyte between the anode side and the cathode side, the fuel cells being arranged in a form of fuel cell stacks, and the arrangement comprises means for determining essential temperature information of the fuel cells. The arrangement for high temperature fuel cell system comprises at least one isolating DC-DC (Direct Current-Direct Current) converter for loading of the stacks, said converter comprising a galvanic isolation stage and power electronic switching means for performing bi-directional power flow through the galvanic isolation stage, at least one heating resistor connected to the fuel cell stack side of the galvanic isolation stage, and active control means for performing modulation controlling of the at least one heating resistor, and said active control means for utilizing the means for performing bi-directional power flow through the galvanic isolation stage to supply power to the at least one heating resistor by exceeding at least occasionally the power output level of the fuel cell stacks to prevent earth fault currents existing in the high temperature fuel cell system from travelling outside from inside of said fuel cell system.

The focus of the invention is also a method for avoiding earth fault currents in electrically heated high temperature fuel cell systems, in which the fuel cells are arranged in a form of fuel cell stacks, and in the method is determined essential temperature information of the fuel cells, In the high temperature fuel cell system method is utilized at least one isolating DC-DC (Direct Current-Direct Current) converter for loading of the stacks, and for providing galvanic isolation stage for at least one heating resistor, which is connected to the fuel cell stack side of the galvanic isolation stage, and controlling of the at least one heating resistor is arranged through modulation, and which converter is arranged to perform bi-directional power flow through the galvanic isolation stage to supply power to the at least one heating resistor by exceeding at least occasionally the power output level of the fuel cell stacks to prevent earth fault currents existing in the high temperature fuel cell system from travelling outside from inside of said fuel cell system.

The invention is based on utilizing bi-directional power flow of a DC-DC (Direct Current-Direct Current) converter in a fuel cell device, which converter operates at substantially high frequencies. This enables supplying of heating resistors from the fuel cell side of the galvanic isolation via a DC (Direct Current) voltage connection, and building of a galvanic isolation stage for both the stacks and the heating resistors for protecting the fuel cell device from fault currents.

The benefit of the invention is that both a component-effective and cost-effective protection of the fuel cell device from problematic effects of fault currents is successfully achieved. For example in marine applications fault currents of electrical heaters used as part of balance of plant (BoP) control system are eliminated without the need for a 50/60Hz isolating transformer.

### Short description of figures

- Figure 1: presents a single fuel cell structure.
- Figure 2: presents an example of a fuel cell device.
- Figure 3: presents a preferred embodiment according to the present invention.
- Figure 4: presents an example of a full-bridge connection topology in a full-bridge isolating DC-DC converter.

### Detailed description of the invention

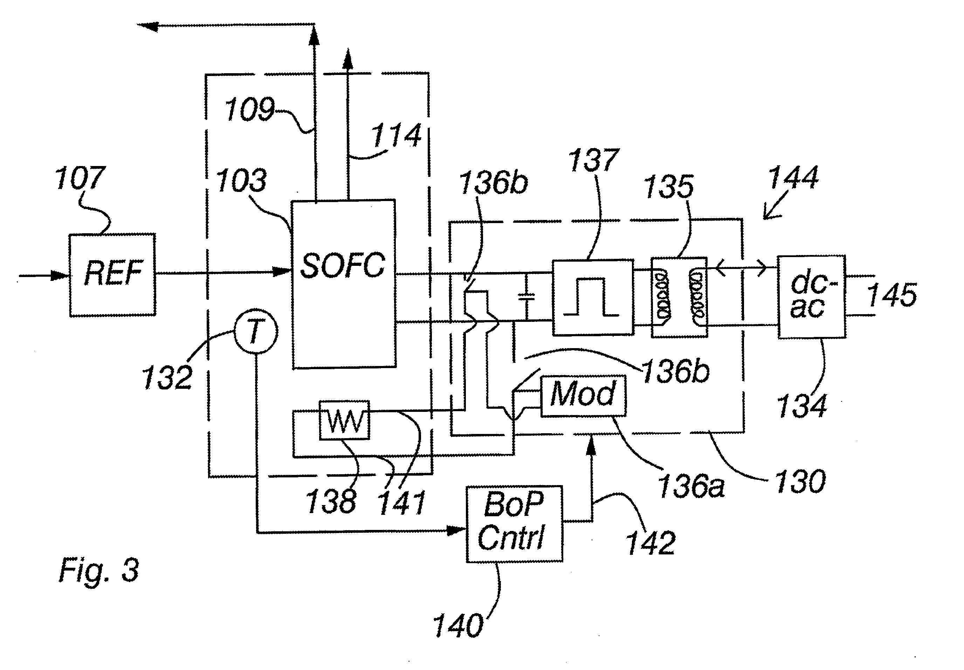

In the arrangement according to the present invention is utilized an isolating DC-DC (Direct Current-Direct Current) converter for loading fuel cell stacks 103 and for operating at substantially high frequencies, which are for example 10-100kHz. Said converter is arranged to being capable of bidirectional power flowing 144 by utilizing power electronics switching means 137 (fig. 3) for controlling bi-directional power flow through the converter. Said means 137 are arranged for example by additional semiconductors, additional control electronics and power electronics switches. The DC-DC converter comprises inherently a galvanic isolation stage which as such can be utilized to provide isolation also for an at least one heating resistor provided that overall power rating (in any direction) of the isolation stage need not be increased. Thus said least one heating resistor is allowed to be placed in the fuel cell side in parallel with the fuel cells. Consequently, the at least one heating resistor utilizes the same galvanic isolation as the fuel cell stacks with a minimum increase in component count and cost compared to a single-directional converter. Because the converter according to the invention is arranged to perform bi-directional power flow through the addition of a few semiconductor switches, it is possible to feed more power to the at least one heating resistor from the converter than the related fuel cell stacks 103 are producing, for example during system heat-up.

If the stacks voltage-wise or in terms of their isolation arrangements in any case would require a separate isolating converter, the additional cost of isolation reduces to the cost of additional semiconductors and control required to accomplish bi-directional power flow. This additional cost is low in comparison to the total cost of a corresponding one-directional converter. Further, the connection of the at least one heating resistor to DC-voltage (Direct Current voltage) of the fuel cell stacks allows for high-frequency switching modulation control of the heating resistor(s), thus causing less distortion to fuel cell system supply (AC, Alternating Current) voltage than AC-switched heating resistors in prior art embodiments. If the modulation control of the heating resistor is integrated to the DC-DC converter, a cost saving is also achieved compared to the use of discrete solid state AC relays in the prior art switching of the heating resistors. The modulation controlling of the at least one heating resistor, i.e. controlling of duty ratio of the heating resistor, is performed by active control means 136 (fig.3), which are for example processor controlled switching means 136 to perform for example pulse width modulation (PWM) control or pulse frequency modulation (PFM) control of the at least one heating resistor. The control processor 136a can be accomplished of analog electronics processor and/or digital electronics processor. The switching means 136b are for example bipolar transistor, FET transistor or some other transistor switches. The invention is also possible to be performed by using one switch 136b. The controlling of the at least one heating resistor 138 (fig. 3) and the DC-DC converter 130 (fig 3) is based for example on temperature information of the fuel cells, which is determined by means 132 (figure 3), said means being a temperature measurement arrangement suitable for high temperature conditions for example from 100 Celsius degrees to even more than 1000 Celsius degrees.

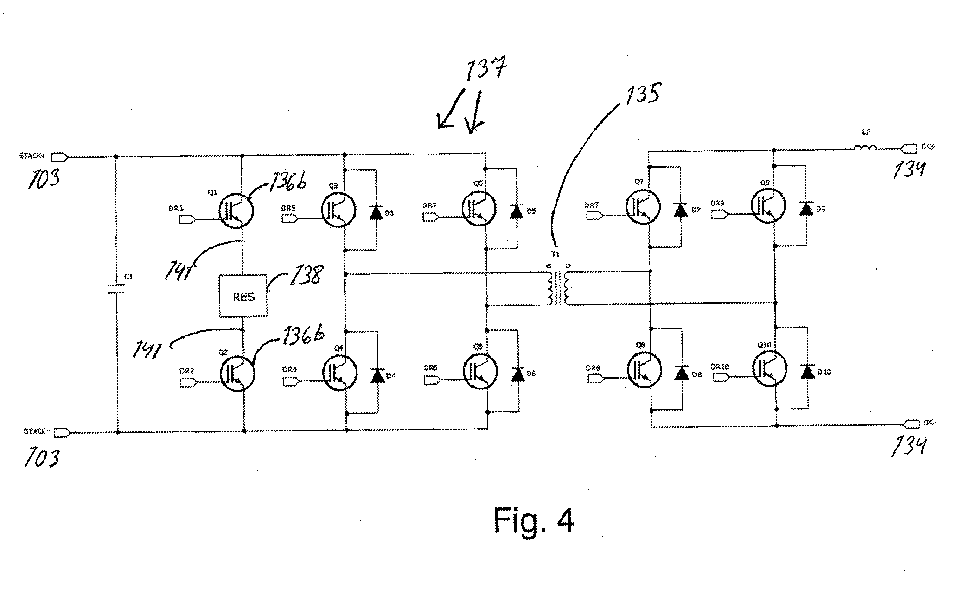

In figure 3 is presented a preferred embodiment according to the present invention for avoiding earth fault currents in electrically heated fuel cell systems, where the fuel cells are being arranged in a form of fuel cell stacks 103, which are connected in at least one group of series and/or parallel connected stacks to achieve a suitable voltage and current for power conversion. The at least one group of stacks 103 is connected to at least one full-bridge isolating DC-DC (Direct Current - Direct Current) converter 130, which is arranged to operate at substantially high frequencies, which are for example 10 - 100 kHz. In figure 4 is presented an example of a full-bridge connection topology in the full-bridge isolating DC-DC converter 130. Reference signs in figure 4 are the same that exist also in figure 3, and thus these signs are explained related to figure 3. Said DC-DC converter 130 performs loading functions of the connected stacks 103. The converter 130 comprises a galvanic isolation stage 135 and power electronic switches 137 for providing galvanic isolation for heating resistors 138, which are thus allowed to be located via a DC (Direct Current) voltage connection 141 in parallel with the fuel cell stacks 103.

As presented in figure 3 the output of the DC-DC converter 130 is connected to a DC-link of at least one DC-AC (Direct Current - Alternating Current) converter 134, which operates in active front-end mode, capable of maintaining a stable DC-link voltage with both inward and outward power flow. The DC-DC converter 130 is then capable of reversed power flow from the DC-link to voltage level of the fuel cell stacks with essentially equal or a reduced power throughput capacity compared to the full capacity in nominal power flow direction. Because the DC-DC converter 130 according to the invention is arranged to bi-directional power flowing 144, it is possible to feed more power to the at least one heating resistor 138 from the converter 130 than the related fuel cell stacks 103 are producing. Active control means 136 are also utilized in said power feeding to the heating resistor(s) 138. The output of the DC-AC converter 134 is connected to electrical network 145, which utilizes the fuel cell system.

In the preferred embodiment of figure 3 the arrangement comprises active control means 136 for pulse width modulation (PWM) of the heating resistors 138, said means 136 being preferably integrated with the DC/DC converter 130. Also the arrangement comprises a balance-of-plant (BoP) control system 140 for determining a heating power set point. The control system 140 communicates with the DC-DC converter 130 for example to command the heating power set point to the converter 130. Said communication is preferably performed via a serial communication arrangement 142 to optimize use of instrumentation cabling.

It is also possible to arrange the active control means 136 for modulation of the heating resistor 138 in a full-bridge arrangement to allow for generating an alternating voltage to the heating resistor to avoid possible galvanic corrosion phenomena.

In a one possible embodiment of the invention the arrangement comprises at least two fuel cell stack 103 groups with a separate DC-DC-converter 130 to each of said stack groups. Each converter is capable of supplying at least one heating resistor 138, having a power rating preferably less or equal to the rated output of the related stack group.

Although above with figures is presented SOFC fuel cell devices, it should be noted, that embodiments according to the invention can be utilized in different kinds of fuel cell devices. In the preferred embodiment of the invention electrical network is most often meant to be the local electrical power distribution network for example in marine applications. DC electricity produced by the fuel cell device is fed to said network for example through a three phase DC-AC transform. Embodiments according to the invention can be realized in many kind of electrical network applications, and thus for example DC-AC transform is not needed in every application.

Although the invention has been presented in reference to the attached figures and specification, the invention is by no means limited to those as the invention is subject to variations within the scope allowed for by the claims.

## Claims

1. An arrangement suitable for avoiding earth fault currents in electrically heated high temperature fuel cell systems, each fuel cell in the fuel cell device comprising an anode side (100), a cathode side (102), an electrolyte (104) between the anode side and the cathode side, the fuel cells being arranged in a form of fuel cell stacks (103), and the arrangement comprises means (132) for determining essential temperature information of the fuel cells, **characterized by**, that the arrangement for high temperature fuel cell system comprises at least one isolating DC-DC (Direct Current-Direct Current) converter (130) for loading of the stacks (103), said converter comprising a galvanic isolation stage (135) and power electronic switching means (137) suitable for performing bi-directional power flow (144) through the galvanic isolation stage (135), at least one heating resistor (138) connected to the fuel cell stack (103) side of the galvanic isolation stage (135), and active modulation control means (136) suitable for performing modulation controlling of the at least one heating resistor (138), and said active modulation control means (136) suitable for utilizing the means (137) for performing bi-directional power flow through the galvanic isolation stage (135) to supply power to the at least one heating resistor (138) by exceeding at least occasionally the power output level of the fuel cell stacks (103) in order to prevent earth fault currents existing in the high temperature fuel cell system from travelling outside from inside of said fuel cell system.

2. An arrangement in accordance with claim 1, **characterized by**, that the arrangement comprises said active modulation control means (136) integrated with the at least one isolating DC-DC (Direct Current-Direct Current) converter (130).

3. An arrangement in accordance with claim 1, **characterized by**, that the at least one isolating DC-DC (Direct Current-Direct Current) converter (130) is a full-bridge isolating DC-DC converter.

4. An arrangement in accordance with claim 1, **characterized by**, that the arrangement comprises at least one DC-AC (Direct Current-Alternating Current) converter (134), and the at least one group of stacks connected to the at least one isolating DC-DC (Direct Current-Direct Current) converter (130), which is connected from its output to a DC-link of the at least one DC-AC converter (134).

5. An arrangement in accordance with claim 4, **characterized by**, that the arrangement comprises the DC-AC (Direct Current-Alternating Current) converter (134) operating in active front-end mode to maintain an essentially stable DC-link voltage with both inward and outward power flow making said DC-DC converter (130) capable of reversed power flow from the DC-link to the fuel cell voltage level.

6. An arrangement in accordance with claim 1, **characterized by**, that the arrangement comprises a balance-of-plant (BoP) control system (140) for determining a heating power set point, and said control system (140) for communicating with the DC-DC (Direct Current-Direct Current) converter (130) to command the heating power set point to the converter (130).

7. An arrangement in accordance with claim 6, **characterized by**, that the arrangement comprises a serial communication arrangement (142) between the balance-of-plant (BoP) control system (140) and the DC-DC (Direct Current-Direct Current) converter (130).

8. An arrangement in accordance with claim 1, **characterized by**, that the arrangement comprises at least two fuel cell stack (103) groups with separate DC-DC-converters (130), each converter being capable of supplying at least one heating resistor, in which total power rating is less or equal to the rated output of the related stack group.

9. A method for avoiding earth fault currents in electrically heated high temperature fuel cell systems, in which the fuel cells are arranged in a form of fuel cell stacks (103), and in the method is determined essential temperature information of the fuel cells, **characterized by**, that in the high temperature fuel cell system method is utilized at least one isolating DC-DC (Direct Current-Direct Current) converter (130) for loading of the stacks (103), and for providing galvanic isolation stage (135) for at least one heating resistor (138), which is connected to the fuel cell stack (103) side of the galvanic isolation stage (135), and controlling of the at least one heating resistor (138) is arranged through modulation, and which converter (130) is arranged to perform bi-directional power flow (144) through the galvanic isolation stage (135) to supply power to the at least one heating resistor (138) by exceeding at least occasionally the power output level of the fuel cell stacks (103) to prevent earth fault currents existing in the high temperature fuel cell system from travelling outside from inside of said fuel cell system.

10. A method in accordance with claim 9, **characterized by**, that the modulation controlling of the at least one heating resistor (138) is integrated with the operation of the at least one isolating DC-DC (Direct Current-Direct Current) converter (130).

11. A method in accordance with claim 9, **characterized by**, that the at least one isolating DC-DC (Direct Current-Direct Current) converter (130) is a full-bridge isolating DC-DC converter.

12. A method in accordance with claim 9, **characterized by**, that the at least one group of stacks is connected to the at least one isolating DC-DC (Direct Current-Direct Current) converter (130), which is connected from its output to a DC-link of at least one DC-AC converter (134).

13. A method in accordance with claim 9, **characterized by**, that the DC-AC (Direct Current-Alternating Current) converter (134) operates in active front-end mode to maintain an essentially stable DC-link voltage with both inward and outward power flow making said DC-DC converter (130) capable of reversed power flow from the DC-link to the fuel cell voltage level.

14. A method in accordance with claim 9, **characterized by**, that a heating power set point is determined in a balance-of-plant (BoP) control system (140), and said control system (140) communicates with the DC-DC (Direct Current-Direct Current) converter (130) to command the heating power set point to the converter (130).

15. A method in accordance with claim 9, **characterized by**, that a serial communication (142) is arranged between the balance-of-plant (BoP) control system (140) and the DC-DC (Direct Current-Direct Current) converter (130).

16. A method in accordance with claim 9, **characterized by**, that separate DC-DC-converters (130) are arranged to at least two fuel cell stack (103) groups, and each converter is capable of supplying at least one heating resistor (138), in which total power rating is less or equal to the rated output of the related stack group.

## Patentansprüche

1. Anordnung, die geeignet ist, um Erdschlussströme in elektrisch erhitzten Hochtemperatur-Brennstoffzellensystemen zu vermeiden, wobei jede Brennstoffzelle in dem Brennstoffzellengerät eine Anodenseite (100), eine Kathodenseite (102) und ein Elektrolyt (104) zwischen der Anodenseite und der Kathodenseite umfasst, wobei die Brennstoffzellen in einer Form von Brennstoffzellenstapeln (103) angeordnet sind, und die Anordnung Mittel (132) zum Bestimmen wesentlicher Temperaturinformationen der Brennstoffzellen umfasst, **dadurch gekennzeichnet, dass** die Anordnung für Hochtemperatur-Brennstoffzellensysteme mindestens einen isolierenden DC-DC-Wandler (Gleichstrom-Gleichstrom) (130) zum Belasten der Stapel (103), wobei der Wandler eine galvanische Trennstufe (135) und elektronische Leistungsschaltmittel (137) umfasst, die sich zum Durchführen von bidirektionalem Leistungsfluss (144) durch die galvanische Trennstufe (135) eignen, mindestens einen Heizwiderstand (138), der mit der Brennstoffzellenstapelseite (103) der galvanischen Trennstufe (135) verbunden ist, und aktive Modulationssteuerungsmittel (136) umfasst, die geeignet sind, um Modulationssteuerung des mindestens einen Heizwiderstands (138) durchzuführen, und die aktiven Modulationssteuerungsmittel (136) geeignet sind, um die Mittel (137) zum Durchführen von bidirektionalem Leistungsfluss durch die galvanische Trennstufe (135) zum Liefern von Leistung an den mindestens einen Heizwiderstand (138) durch zumindest gelegentliches Überschreiten des Leistungsabgabepegels der Brennstoffzellenstapel (103) zu verwenden, um zu verhindern, dass Erdschlussströme, die in dem Inneren des Brennstoffzellensystems vorhanden sind, aus dem Hochtemperatur-Brennstoffzellensystem nach außen gelangen.

2. Anordnung nach Anspruch 1, **dadurch gekennzeichnet, dass** die Anordnung die aktiven Modulationssteuerungsmittel (136) umfasst, die mit dem mindestens einen isolierenden DC-DC-Wandler (Gleichstrom-Gleichstrom) (130) integriert sind.

3. Anordnung nach Anspruch 1, **dadurch gekennzeichnet, dass** der mindestens eine isolierende DC-DC-Wandler (Gleichstrom-Gleichstrom) (130) ein isolierender Vollbrücken-DC-DC-Wandler ist.

4. Anordnung nach Anspruch 1, **dadurch gekennzeichnet, dass** die Anordnung mindestens einen DC-AC-Wandler (Gleichstrom-Wechselstrom) (134) und die mindestens eine Gruppe von Stapeln umfasst, die mit dem mindestens einen isolierenden DC-DC-Wandler (Gleichstrom-Gleichstrom) (130) verbunden ist, der von seinem Ausgang mit einer Gleichstromverbindung des mindestens einen Gleichstrom-Wechselstromwandlers (134) verbunden ist.

5. Anordnung nach Anspruch 4, **dadurch gekennzeichnet, dass** die Anordnung den DC-AC-Wandler (Gleichstrom-Wechselstrom) (134) umfasst, der in der Active-Front-End-Betriebsart arbeitet, um eine im Wesentlichen stabile Gleichstromverbindungsspannung beim Leistungsfluss sowohl nach innen als auch nach außen zu halten, wodurch der Gleichstrom-Gleichstrom-Wandler (130) für umgekehrten Leistungsfluss von der Gleichstromverbindung zum Brennstoffzellen-Spannungspegel in der Lage ist.

6. Anordnung nach Anspruch 1, **dadurch gekennzeichnet, dass** die Anordnung ein Anlagenperipherie-Steuersystem (Balance-of-Plant (BoP)) (140) zum Bestimmen eines Heizleistungssollwerts und das Steuersystem (140) zum Kommunizieren mit dem DC-DC-Wandler (Gleichstrom-Gleichstrom) (130) umfasst, um dem Wandler (130) den Heizleistungssollwert zu befehlen.

7. Anordnung nach Anspruch 6, **dadurch gekennzeichnet, dass** die Anordnung eine serielle Kommunikationsanordnung (142) zwischen dem Anlagenperipherie-Steuersystem (Balance-of-Plant (BoP)) (140) und dem DC-DC-Wandler (Gleichstrom-Gleichstrom) (130) umfasst.

8. Anordnung nach Anspruch 1, **dadurch gekennzeichnet, dass** die Anordnung mindestens zwei Brennstoffzellen-Stapelgruppen (103) mit getrennten Gleichstrom-Gleichstrom-Wandlern (130) umfasst, wobei jeder Wandler in der Lage ist, mindestens einen Heizwiderstand zu liefern, in dem die gesamte Nennleistung kleiner oder gleich der Nennabgabe der entsprechenden Stapelgruppe ist.

9. Verfahren zum Vermeiden von Erdschlussströmen in elektrisch geheizten Hochtemperatur-Brennstoffzellensystemen, wobei die Brennstoffzellen in einer Form von Brennstoffzellenstapeln (103) angeordnet sind, und in dem Verfahren wesentliche Temperaturinformationen der Brennstoffzellen bestimmt werden, **dadurch gekennzeichnet, dass** in dem Hochtemperatur-Brennstoffzellensystemverfahren mindestens ein isolierender DC-DC-Wandler (Gleichstrom-Gleichstrom) (130) zum Belasten der Stapel (103) und zum Bereitstellen einer galvanischen Trennstufe (135) für mindestens einen Heizwiderstand (138) verwendet wird, der mit der Brennstoffzellenstapelseite (103) der galvanischen Trennstufe (135) verbunden ist, und das Steuern des mindestens einen Heizwiderstands (138) durch Modulation eingerichtet ist, und wobei der Wandler (130) angeordnet ist, um bidirektionalen Leistungsfluss (144) durch die galvanische Trennstufe (135) durchzuführen, um Leistung an den mindestens einen Heizwiderstand (138) zu liefern, indem der Leistungsabgabepegel der Brennstoffzellenstapel (103) zumindest gelegentlich überschritten wird, um zu verhindern, dass Erdschlussströme, die in dem Hochtemperatur-Brennstoffzellensystem vorhanden sind, vom Inneren des Brennstoffzellensystems nach außen gelangen.

10. Verfahren nach Anspruch 9, **dadurch gekennzeichnet, dass** das Modulationssteuern des mindestens einen Heizwiderstands (138) mit dem Betrieb des mindestens einen isolierenden DC-DC-Wandlers (Gleichstrom-Gleichstrom) (130) integriert ist.

11. Verfahren nach Anspruch 9, **dadurch gekennzeichnet, dass** der mindestens eine isolierende DC-DC-Wandler (Gleichstrom-Gleichstrom) (130) ein isolierender Vollbrücken-DC-DC-Wandler ist.

12. Verfahren nach Anspruch 9, **dadurch gekennzeichnet, dass** die mindestens eine Gruppe von Stapeln mit dem mindestens einen isolierenden DC-DC-Wandler (Gleichstrom-Gleichstrom) (130) verbunden ist, der von seinem Ausgang mit einer Gleichstromverbindung von mindestens einem Gleichstrom-Wechselstromwandler (134) verbunden ist.

13. Verfahren nach Anspruch 9, **dadurch gekennzeichnet, dass** der DC-AC-Wandler (Gleichstrom-Wechselstrom) (134) in der Active-Front-End-Betriebsart arbeitet, um eine im Wesentlichen stabile Gleichstromverbindungsspannung mit dem Leistungsfluss sowohl nach innen als auch nach außen zu halten, wodurch der Gleichstrom-Gleichstrom-Wandler (130) für umgekehrten Leistungsfluss von der Gleichstromverbindung zum Brennstoffzellen-Spannungspegel in der Lage ist.

14. Verfahren nach Anspruch 9, **dadurch gekennzeichnet, dass** ein Heizleistungssollwert in einem Anlagenperipherie-Steuersystem (Balance-of-Plant (BoP)) (140) bestimmt wird und das Steuersystem (140) mit dem DC-DC-Wandler (Gleichstrom-Gleichstrom) (130) kommuniziert, um dem Wandler (130) den Heizleistungssollwert zu befehlen.

15. Verfahren nach Anspruch 9, **dadurch gekennzeichnet, dass** eine serielle Kommunikation (142) zwischen dem Anlagenperipherie-Steuersystem (Balance-of-Plant (BoP)) (140) und dem DC-DC-Wandler (Gleichstrom-Gleichstrom) (130) eingerichtet ist.

16. Verfahren nach Anspruch 9, **dadurch gekennzeichnet, dass** getrennte Gleichstrom-Gleichstrom-Wandler (130) an mindestens zwei Brennstoffzellen-Stapelgruppen (103) angeordnet sind und jeder Wandler in der Lage ist, mindestens einen Heizwiderstand (138) zu liefern, wobei die Nennleistung kleiner oder gleich der Nennabgabe der entsprechenden Stapelgruppe ist.

## Revendications

1. Agencement adapté pour éviter des courants de défaut à la terre dans des systèmes de piles à combustible à haute température chauffés électriquement, chaque pile à combustible du dispositif de piles à combustible comprenant un côté anode (100), un côté cathode (102), un électrolyte (104) entre le côté anode et le côté cathode, les piles à combustible étant disposées sous une forme d'empilements (103) de piles à combustible, et l'agencement comprenant des moyens (132) pour déterminer de l'information de température essentielle des piles à combustible, **caractérisé en ce que** l'agencement pour le système de piles à combustible à haute température comprend au moins un convertisseur CC-CC (Courant Continu - Courant Continu) isolant (130) pour charger les empilements (103), ledit convertisseur comprenant un étage d'isolation galvanique (135) et un moyen de commutation de puissance électronique (137) adapté pour réaliser un débit de puissance bidirectionnel (144) à travers l'étage d'isolation galvanique (135), au moins une résistance chauffante (138) connectée au côté de l'empilement de piles à combustible (103) de l'étage d'isolation galvanique (135), et un moyen de commande par modulation active (136) adapté pour effectuer une commande par modulation de cette au moins une résistance chauffante (138), et ledit moyen de commande par modulation active (136) étant adapté pour utiliser le moyen (137) pour réaliser le débit de puissance bidirectionnel à travers l'étage d'isolation galvanique (135) afin d'alimenter en puissance cette au moins une résistance chauffante (138) en dépassant au moins de manière occasionnelle le niveau de sortie de puissance des empilements de piles à combustible (103) afin d'éviter que des courants de défaut à la terre existant dans le système de piles à combustible à haute température ne s'échappent vers l'extérieur à partir de l'intérieur dudit système de piles à combustible.

2. Agencement selon la revendication 1, **caractérisé en ce que** l'agencement comprend ledit moyen de commande par modulation active (136) intégré dans cet au moins un convertisseur CC-CC (Courant Continu - Courant Continu) isolant (130).

3. Agencement selon la revendication 1, **caractérisé en ce que** cet au moins un convertisseur CC-CC (Courant Continu - Courant Continu) isolant (130) est un convertisseur CC-CC isolant en pont complet.

4. Agencement selon la revendication 1, **caractérisé en ce que** l'agencement comprend au moins un convertisseur CC-CA (Courant Continu - Courant Alternatif) (134), et cet au moins un groupe d'empilements connecté à l'au moins un convertisseur CC-CC (Courant Continu - Courant Continu) isolant (130), lequel est connecté depuis sa sortie à une liaison CC de cet au moins un convertisseur CC-CA (134).

5. Agencement selon la revendication 4, **caractérisé en ce que** l'agencement comprend le convertisseur CC-CA (Courant Continu - Courant Alternatif) (134) fonctionnant dans un mode frontal actif afin de conserver une tension de liaison CC sensiblement stable avec le débit de puissance vers l'intérieur tout comme vers l'extérieur en rendant ledit convertisseur CC-CC (130) capable d'un débit de puissance inversé depuis la liaison CC jusqu'au niveau de tension des piles à combustible.

6. Agencement selon la revendication 1, **caractérisé en ce que** l'agencement comprend un système de contrôle d'équilibrage d'usine (BoP ou balance-of-plant) (140) pour déterminer un point de réglage de puissance de chauffage, et ledit système de contrôle (140) pour communiquer avec le convertisseur CC-CC (Courant Continu - Courant Continu) (130) afin de commander le point de réglage de puissance de chauffage par rapport au convertisseur (130).

7. Agencement selon la revendication 6, **caractérisé en ce que** l'agencement comprend un agencement de communication série (142) entre le système de contrôle d'équilibrage d'usine (BoP) (140) et le convertisseur CC-CC (Courant Continu - Courant Continu) (130).

8. Agencement selon la revendication 1, **caractérisé en ce que** l'agencement comprend au moins deux groupes d'empilements de piles à combustible (103) avec des convertisseurs CC-CC (130) distincts, chaque convertisseur étant capable d'alimenter une résistance chauffante, dans lequel la puissance nominale totale est inférieure ou égale au rendement nominal du groupe d'empilements connexe.

9. Procédé pour éviter des courants de défaut à la terre dans des systèmes de piles à combustible à haute température chauffés électriquement, dans lequel les piles à combustible sont disposées sous la forme d'empilements de piles à combustible (103), et dans le procédé, de l'information de température essentielle des piles à combustible étant déterminée, **caractérisé en ce que**, dans le procédé du système de piles à combustible à haute température, on utilise au moins un convertisseur CC-CC (Courant Continu - Courant Continu) isolant (130) pour la charge des empilements (103) et pour fournir un étage d'isolation galvanique (135) pour au moins une résistance chauffante (138) qui est connectée au côté d'empilement des piles à combustible (103) de l'étage d'isolation galvanique (135), et la commande de cette au moins une résistance chauffante (138) étant réalisée par modulation, et lequel convertisseur (130) étant étudié pour réaliser un débit de puissance bidirectionnel (144) à travers l'étage d'isolation galvanique (135) afin de fournir de la puissance à cette au moins une résistance chauffante (138) en dépassant au moins occasionnellement le niveau de sortie de puissance des empilements de piles à combustible (103) afin d'éviter que des courants de défaut à la terre existant dans le système de piles à combustible à haute température ne s'échappent vers l'extérieur à partir de l'intérieur dudit système de piles à combustible.

10. Procédé selon la revendication 9, **caractérisé en ce que** la commande par modulation de cette au moins une résistance chauffante (138) est intégrée avec le fonctionnement de cet au moins un convertisseur CC-CC (Courant Continu - Courant Continu) isolant (130).

11. Procédé selon la revendication 9, **caractérisé en ce que** cet au moins un convertisseur CC-CC (Courant Continu - Courant Continu) isolant (130) est un convertisseur CC-CC isolant en pont complet.

12. Procédé selon la revendication 9, **caractérisé en ce que** cet au moins un groupe d'empilements est connecté à cet au moins un convertisseur CC-CC (Courant Continu - Courant Continu) isolant (130), lequel est connecté depuis sa sortie à une liaison CC d'au moins un convertisseur CC-CA (134).

13. Procédé selon la revendication 9, **caractérisé en ce que** le convertisseur CC-CA (Courant Continu - Courant Alternatif) (134) fonctionne en mode frontal actif afin de conserver une tension de liaison CC sensiblement stable avec le débit de puissance vers l'intérieur tout comme vers l'extérieur en rendant ledit convertisseur CC-CC (130) capable d'un débit de puissance inversé depuis la liaison CC jusqu'au niveau de tension des piles à combustible.

14. Procédé selon la revendication 9, **caractérisé en ce que** l'on détermine un point de réglage de puissance de chauffage dans un système de contrôle d'équilibrage d'usine (BoP) (140), et ledit système de contrôle (140) communiquant avec le convertisseur CC-CC (Courant Continu - Courant Continu) (130) afin de contrôler le point de réglage de puissance de chauffage par rapport au convertisseur (130).

15. Procédé selon la revendication 9, **caractérisé en ce qu'**une communication série (142) est disposée entre le système de contrôle d'équilibrage d'usine (BoP) (140) et le convertisseur CC-CC (Courant Continu - Courant Continu) isolant (130).

16. Procédé selon la revendication 9, **caractérisé en ce que** des convertisseurs CC-CC (130) distincts sont disposés pour au moins deux groupes d'empilements de piles à combustible (103), et chaque convertisseur étant capable d'alimenter au moins une résistance chauffante (138), dans lequel la puissance nominale totale est inférieure ou égale au rendement nominal du groupe d'empilements connexe.
